(19) Europäisches Patentamt
European Patent Office
Office européen des brevets

(11) Veröffentlichungsnummer: **0 516 021 A2**

## (12) EUROPÄISCHE PATENTANMELDUNG

(21) Anmeldenummer: **92108791.2**

(51) Int. Cl.5: **B29C 71/00**, //B29K67:00

(22) Anmeldetag: **25.05.92**

(30) Priorität: **28.05.91 DE 4117378**

(43) Veröffentlichungstag der Anmeldung:
**02.12.92 Patentblatt 92/49**

(84) Benannte Vertragsstaaten:
**AT BE CH DE DK ES FR GB GR IT LI NL**

(71) Anmelder: **HOECHST AKTIENGESELLSCHAFT**
**Postfach 80 03 20**
**W-6230 Frankfurt am Main 80(DE)**

(72) Erfinder: **Breitschaft, Siegfried, Dr.**
**Klinkerberg 7**
**W-8900 Augsburg(DE)**

(54) Verfahren zur Stabilisierung von Hohlkörpern aus Polyestern.

(57) Beschrieben wird ein Verfahren zur Stabilisierung von Hohlkörpern aus Polyestern, bei dem die unter Druck gesetzten Hohlkörper insgesamt oder ihre zu stabilisierenden Bereiche einer kurzfristigen, keine wesentliche Volumenänderung des Hohlkörpers herbeiführenden Wärmebehandlung unterworfen werden. Zweckmäßigerweise beträgt der Innendruck, unter dem die Behandlung erfolgt, 2 - 7 bar, die Behandlungstemperatur 120 bis 380°C und die Behandlungsdauer 0,2 bis 10 Sekunden.

EP 0 516 021 A2

Wegen ihrer hohen Festigkeit gegen Innendruck haben Hohlkörper aus Polyestern, insbesondere aus Polyethylenterephthalat, als Gebinde für Flüssigkeiten, insbesondere solchen, die unter Druck stehen, wie z.B. für Kohlendioxid enthaltende Getränke, weite Verbreitung gefunden.

Solche Hohlkörper werden nach dem Spritz-Streckblas-Verfahren hergestellt. Bei diesem, speziell zur Hohlkörperherstellung aus Polyethylenterephthalat entwickelten Verfahren wird ein länglicher Vorformling spritzgegossen, der im thermoelastischen Zustand (bei ca. 100°C) mit Hilfe eines Streckstabes und durch Preßluft zur Flasche ausgeformt wird. Dabei erfährt der Mittelteil des Vorformlings eine biaxiale Orientierung bis nahe an die Streckgrenze des Materials und damit erhebliche Eigenschaftsverbesserungen wie Festigkeitszunahme und verringerte Empfindlichkeit gegen chemische Einflüsse. Der an das beim Streckblasprozeß unverändert bleibende Gewinde (incl. Stützring) sich anschließende Flaschenhals und die Umgebung des Angußpunktes im Zentrum des Bodens dagegen werden weniger verstreckt und bleiben gegen mechanische und chemische Einflüsse empfindlich.

Für die Gebrauchstüchtigkeit der Hohlkörper ist es deshalb von entscheidender Bedeutung, ob die gegebenenfalls durch komplexe Formgebung noch zusätzlich erhöhte Empfindlichkeit dieser Teile auf die Verwendung störend Einfluß nehmen kann. Eine Schlüsselrolle spielt hierbei die Konstruktion des Bodens.

Beispielsweise sind die zu Beginn der Einführung der Polyesterflaschen ausschließlich und auch jetzt noch überwiegend verwendeten halbsphärischen Böden völlig unproblematisch. Da diese Flaschen aber mit Basecups ausgestattet werden müssen, um stehen zu können, werden aus Gründen vereinfachter Herstellung und der besonders im Hinblick auf Recyclierbarkeit erwünschten Abwesenheit von Fremdmaterialien - Basecups sind meist aus Polyethylen und mit Schmelzkleber an der Flasche befestigt - zunehmend Bodenkonstruktionen bevorzugt, die auf diese Standhilfen nicht angewiesen sind.

Ausführungsformen, die freies Stehen ermöglichen, sind z. B. die sogenannten Petaloidböden, sphärische Böden mit 5,6 oder mehr ausgestülpten Füßchen, beschrieben z. B. in dem US Patent 3598270 und den deutschen Offenlegungsschriften 2352738 und 2603881. Als Folge dieser komplexen geometrischen Gestalt ergibt sich, insbesondere unter dem Einfluß erhöhten Innendrucks und/oder unter der Mitwirkung rißfördernder alkalischer Medien oder polarer organischer Flüssigkeiten, beginnend in der Außenhaut des Gebindebodens Rißbildung, die entweder spontan auftritt - mit dem Erscheinungsbild des Sprödbruchs - oder sich in allmählichem Leckwerden der befüllten Flaschen äußert.

Mit verschiedenen konstruktiven Varianten der Petaloidböden versuchte man diesem Problem zu begegnen, ohne daß es jedoch bisher gelungen wäre, zuverlässig Abhilfe zu schaffen.

In der Literatur ist dieser Nachteil des Petaloidbodens allerdings kaum erwähnt, obwohl er den Praktiker in erheblichem Maß beschäftigt. Schriftliche Hinweise auf die Existenz des Problems sind bislang nur mittelbar Anzeigen in einschlägigen Fachzeitschriften wie z.B. "Modern Plastics International", Nov. 1990, S. 79 oder wiederholten Anzeigen in "Beverage World" zu entnehmen.

Es wurde nun überraschend gefunden, daß unabhängig von der konstruktiven Ausführung des Hohlkörpers, durch eine Nachbehandlung die erwünschte Unempfindlichkeit auch komplex geformter Teile gegen Spannungsrisse erreicht werden kann.

Gegenstand der vorliegenden Erfindung ist somit ein Verfahren zur Stabilisierung von Hohlkörpern aus Polyestern, insbesondere aus solchen auf der Basis von Polyethylenterephthalat, das dadurch gekennzeichnet ist, daß die Hohlkörper mit einem Innendruck beaufschlagt werden und die unter Druck stehenden Hohlkörper insgesamt oder ihre zu stabilisierenden Bereiche einer kurzfristigen, keine wesentliche Volumenänderung des Hohlkörpers herbeiführenden Wärmebehandlung unterworfen werden.

Vorzugsweise werden die Hohlkörper zur Wärmebehandlung auf einen Innendruck gebracht, der vorzugsweise etwa dem im Gebrauch zu erwartenden maximalen Druck entspricht.
Es hat sich als besonders praktikabel erwiesen, wenn die Hohlkörper zur Wärmebehandlung auf einen Innendruck von 2-7 bar, vorzugsweise 4-6 bar, gebracht werden.

Zur Durchführung des erfindungsgemäßen Verfahren kann der zu stabilisierende Hohlkörper insgesamt der Wärmebehandlung unterworfen werden. Da sich jedoch in der Regel große Teile der Hohlkörper als unempfindlich gegen die genannten schädigenden Einflüsse erweisen, ist es einfacher und daher vorteilhaft, nur die Bereiche mit amorphen Materialanteilen und/oder komplexer geometrischer Formgebung des Hohlkörpers der Wärmebehandlung zu unterwerfen. Besonders bevorzugt werden Bereiche der Einfüllöffnung - bei Flaschen insbesondere des Flaschenhalses - und des Bodens des Hohlkörpers der Wärmebehandlung unterworfen.

Die erfindungsgemäße Wärmebehandlung der Hohlkörper oder der empfindlichen Bereiche erfolgt bei einer Temperatur von 100 - 380°C, vorzugsweise von 150 - 350°C, insbesondere bei 200 - 250°C.

Sie wird zweckmäßigerweise mit einem Fluid entsprechender Temperatur, durch kurzes Beflammen oder mit einem Strahler entsprechender Energieabgabe ausgeführt.

Als Fluide, die sich für eine solche Wärmezufuhr eignen, sind vorzugsweise erhitzte Gase wie Luft oder Inertgase (z.B. Stickstoff, $CO_2$, Argon) oder Dämpfe wie z.B. gesättigter oder überhitzter Wasserdampf oder flüssige Wärmeträger wie z.B. hitzebestädige Öle, insbesondere z.B. Siliconöle geeignet.

Alternativ kann die nötige Wärmeenergie den Hohlkörpern aber auch durch Energiestrahler wie z.B. Mikrowellenstrahler oder Infrarotstrahler zugeführt werden.

Es hat sich überraschenderweise gezeigt, daß die Wärmebehandlung sich nicht auf die gesamte Dicke der Wandung des zu stabilisierenden Hohlkörper(bereich)s erstrecken muß. Vielmehr genügt es, wenn sie sich nur auf eine Teildicke der behandelten Wandungsbereiche, z.B. auf weniger als 80%, vorzugsweise auf weniger als 40% der Wandstärke erstreckt.

In vielen praktischen Fällen genügt es sogar schon, wenn die Wärmebehandlung sich nur auf eine sehr dünne Außenschicht der behandelten Wandungsbereiche erstreckt.

Die Dauer der Wärmezufuhr richtet sich nach den Umständen des Einzelfalls, beispielsweise nach der Wärmekapazität und der in der Zeiteinheit zugeführten Menge des Wärmeträgers, nach dem Wärmeübergang zwischen Wärmeträger und Hohlkörper, der Energieabsorption des Hohlkörpermaterials aus Strahlungsfeldern, der Frequenz der Strahlung und sonstigen apparativen Merkmalen.

Unter normalen Bedingungen ergibt sich eine aureichende Dauer der Wärmebehandlung, wenn der Hohlkörper bzw. dessen empfindliche, zu stabilisierende Bereiche für eine Zeitdauer von 0,2 bis 10 Sekunden, vorzugsweise 0,5 bis 6 Sekunden, der Wärmezufuhr ausgesetzt werden.

Die erfindungsgemäße Wärmebehandlung kann Bestandteil der Flaschenproduktion sein oder in einem anschließenden getrennten Schritt separat ausgeführt werden. Die erfindungsgemäße Wärmebehandlung ist aber auch nach dem Abfüllen möglich, was in vielen Fällen besonders vorteilhaft ist.

Das erfindungsgemäße Verfahren eignet sich prinzipiell zur Behandlung von Hohlkörpern aus thermoplastischen Polyestern, die nach dem Spritz-Streckblas-Verfahren verformt werden können.

Bevorzugt werden Hohlkörper, wie z.B. Flaschen, aus Polyestern auf Basis von Polyethylenterephthalat erfindungsgemäß behandelt. Polyester auf Basis von Polyethylenterephthalat sind Polyethylenterephthalat selbst, insbesondere aber chemisch modifiziertes Polyethylenterephthalat, wie es vielfach für die Herstellung von streckgeblasenen Hohlkörpern eingesetzt wird. Die in diesem modifizierten Polyethylenterephthalat enthaltenen Modifizierungskomponenten, die im wesentlichen der Optimierung der Kristallisationscharakteristik dienen, können Säure- oder Diolkomponenten sein. Als modifizierende Säurekomponente hat sich in der Praxis die Isophthalsäure, vorzugsweise in Mengenanteilen von 0,5 bis 5 Gew.%, insbesondere 1 bis 2,5 Gew%, besonders bewährt. Bewährte Diolkomponenten sind Diethylenglycol, das zweckmäßigerweise in einem Mengenanteil von 0,5 bis 3 Gew.%, insbesondere 1 bis 2 Gew.% eingesetzt wird oder z.B. Bishydroxymethyl-cyclohexan, das üblicherweise in Mengenanteilen von 0,5 bis 5 Gew.%, vorzugsweise 1,5 bis 3 Gew.%, in dem Polyethylenterephthalat enthalten ist.

Auch Kombinationen von modifizierenden Säure- und Diolkomponenten können in dem Polyethylenterephthalat enthalten sein, wie z.B. 0,5 bis 2,5 Gew.%, vorzugsweise 1 bis 2 Gew.% Isophthalsäure und 0,5 bis 2,5, vorzugsweise 1 bis 2 Gew.% Diethylenglycol.

Das erfindungsgemäße Stabilisierungsverfahren ist besonders wertvoll zur Qualitätsverbesserung von Flaschen, insbesondere Getränkeflaschen für kohlensäurehaltige Getränke.

Von besoderer Wichtigkeit ist es hierbei, daß die Wärmebehandlung im Bereich des Flaschenbodens bzw. Flaschenhalses erfolgt.

Eine für diesen Zweck besonders geeignete Ausführungsform des erfindungsgemäßen Verfahrens besteht darin, daß streckgeblasene Flaschen zunächst auf einen Innendruck gebracht werden, der dem zu erwartenden maximalen Druck im Gebrauch entspricht. Die Böden dieser Flaschen werden sodann 0,5-4 Sekunden lang mit Luft von ca. 250°C angeblasen, über ein Wärmestrahlungsfeld geführt oder beflammt. Durch Beflammen ist eine besonders zielgenaue Beeinflussung der amorphen Bereiche und des Anschnitts möglich.

Beispiel:

Ein marktgängiger Flaschentyp (6-Füßchen-Petaloidboden), dessen Boden unter Einwirkung einer leicht alkalischen Spülflüssigkeit (pH 10 bis 11) und 6 bar Innendruck innerhalb von 2 bis 10 Minuten brechen würde, wird zunächst in trockenem Zustand auf einen Druck von 6 bar gebracht und mit 250°C heißer Luft 1 Sekunde lang aus einer Entfernung von 1-2 cm angeblasen. Nach dieser Vorbehandlung tritt Bruch unter den o.g. Bedingungen erst nach mehr als 10 Stunden ein.

Erfahrungsgemäß kann damit als sicher gelten, daß unter Praxisbedingungen die Flasche intakt bleibt.

**Patentansprüche**

1. Verfahren zur Stabilisierung von Hohlkörpern aus Polyester, dadurch gekennzeichnet, daß die unter Druck gesetzten Hohlkörper insgesamt oder ihre zu stabilisierenden Bereiche einer kurzfristigen, keine wesentliche Volumenänderung des Hohlkörpers herbeiführenden Wärmebehandlung unterworfen werden.

2. Verfahren gemäß Anspruch 1, dadurch gekennzeichnet, daß die Hohlkörper zur Wärmebehandlung auf einen Innendruck, der vorzugsweise etwa dem im Gebrauch zu erwartenden maximalen Druck entspricht, gebracht werden.

3. Verfahren gemäß mindesten einem der Ansprüche 1 und 2, dadurch gekennzeichnet, daß die Hohlkörper auf einen Innendruck von 2-7 bar, vorzugsweise 4-6 bar, gebracht werden.

4. Verfahren gemäß mindestens einem der Ansprüche 1 bis 3, dadurch gekennzeichnet, daß die Bereiche mit amorphen Materialanteilen und/oder komplexer geometrischer Formgebung des Hohlkörpers der Wärmebehandlung unterworfen werden.

5. Verfahren gemäß mindestens einem der Ansprüche 1 bis 4, dadurch gekennzeichnet, daß die Bereiche der Einfüllöffnung und des Bodens des Hohlkörpers der Wärmebehandlung unterworfen werden.

6. Verfahren gemäß mindestens einem der Ansprüche 1 bis 5, dadurch gekennzeichnet, daß die Wärmebehandlung bei einer Temperatur von 100 - 380°C, vorzugsweise von 150 - 350°C, insbesondere bei 200 - 250°C erfolgt.

7. Verfahren gemäß mindestens einem der Ansprüche 1 bis 6, dadurch gekennzeichnet, daß die Wärmebehandlung mit einem Fluid entsprechender Temperatur oder einem Strahler entsprechender Energieabgabe ausgeführt wird.

8. Verfahren gemäß mindestens einem der Ansprüche 1 bis 7, dadurch gekennzeichnet, daß die Wärmebehandlung sich nur auf eine Teildicke der behandelten Wandungsbereiche erstreckt.

9. Verfahren gemäß mindestens einem der Ansprüche 1 bis 8, dadurch gekennzeichnet, daß die Wärmebehandlung sich nur aufeine sehr dünne Außenschicht der behandelten Wandungsbereiche erstreckt.

10. Verfahren gemäß mindestens einem der Ansprüche 1 bis 9, dadurch gekennzeichnet, daß die Wärmebehandlung für eine Zeitdauer von 0,2 bis 10 Sekunden, vorzugsweise 0,5 bis 6 Sekunden, ausgeführt wird.

11. Verfahren gemäß mindestens einem der Ansprüche 1 bis 10, dadurch gekennzeichnet, daß die Wärmebehandlung Bestandteil der Flaschenproduktion ist oder separat ausgeführt wird.

12. Verfahren gemäß mindestens einem der Ansprüche 1 bis 11, dadurch gekennzeichnet, daß die Wärmebehandlung nach dem Abfüllen erfolgt.

13. Verfahren gemäß mindestens einem der Ansprüche 1 bis 12, dadurch gekennzeichnet, daß der Hohlkörper eine Flasche ist.

14. Verfahren gemäß Anspruch 13, dadurch gekennzeichnet,daß die Wärmebehandlung im Bereich des Flaschenbodens bzw. Flaschenhalses erfolgt.